(19) **Europäisches Patentamt / European Patent Office / Office européen des brevets**

(11) **EP 1 664 240 B1**

(12) **EUROPEAN PATENT SPECIFICATION**

(45) Date of publication and mention
of the grant of the patent:
**10.09.2008 Bulletin 2008/37**

(51) Int Cl.:
*C10B 49/14* (2006.01)     *B09B 3/00* (2006.01)
*C10B 53/00* (2006.01)     *C10G 1/10* (2006.01)

(21) Application number: **04775187.0**

(22) Date of filing: **08.10.2004**

(86) International application number:
**PCT/PL2004/000081**

(87) International publication number:
**WO 2005/078049 (25.08.2005 Gazette 2005/34)**

(54) **A METHOD AND A DEVICE FOR CONTINUOUS CONVERSION OF ORGANIC WASTE**

VERFAHREN UND VORRICHTUNG ZUR KONTINUIERLICHEN KONVERSION VON
ORGANISCHEM ABFALL

PROCEDE ET DISPOSITIF POUR LA CONVERSION CONTINUE DE DECHETS ORGANIQUES

(84) Designated Contracting States:
**AT BE BG CH CY CZ DE DK EE ES FI FR GB GR
HU IE IT LI LU MC NL PL PT RO SE SI SK TR**

(30) Priority: **18.02.2004 PL 36536104
24.09.2004 PL 37031404**

(43) Date of publication of application:
**07.06.2006 Bulletin 2006/23**

(73) Proprietor: **Technologie Ekologiczne
97-400 Belchatow (PL)**

(72) Inventor: **TOKARZ, Zbigniew
PL-97-400 Belchatow (PL)**

(74) Representative: **Grünecker, Kinkeldey,
Stockmair & Schwanhäusser
Anwaltssozietät
Leopoldstrasse 4
80802 München (DE)**

(56) References cited:
**WO-A-02/100563          WO-A1-20/04072208
US-A- 1 658 143          US-A- 3 770 419**

## Description

## Field of the invention

The present invention concerns a method and a device for continuous conversion of organic waste, in particular contaminated waste plastics and worn out vehicle tyres. The present method constitutes a process of liquefying waste, which takes place in a presence of liquid metal, alloy or other inorganic medium, e.g. inorganic salts and/or metal hydroxides comprising metals of the I-st and the II-nd group of the periodic classification of elements. The process of cracking of waste is carried out in order to obtain monomers or a mixture of hydrocarbons in the gaseous form, which could be utilized for the production of liquid fuels.

## Background of the invention

A method of utilization of plastics has been disclosed in the international publication WO95/06682 of the Japanese patent application, which proposes to supply a mixture of plastics, mainly polyolefin type, by means of an extruder, to a reactor, at heightened temperature and in the presence of a catalyst suitable for catalytic cracking. The de-polymerisation product undergoes a fractioning into fractions of diesel fuel and gasoline. The total efficiency reaches 70% in relation to raw materials introduced into the process.

American patent US 3,770,419 (Brown) teaches a pyrolisis process for recycling of organic and non-organic refuse including metals, which comprises feeding the refuse into a closed retort having a molten metal bath, submerging the refuse in said bath, collecting vapours, separating any remaining solid residue from the other molten metals, conveying the solid residue out of the retort and collecting some molten metals by skimming and conveying skimmed molten metals out of the retort.

American patent US 1,658,143 (Tripp) teaches an apparatus for distillation of oil shale comprising a distillation chamber having a corrugated floor, a burner beneath the floor, a series of drums extending across and rotatably mounted within the chamber, a conveyor at the discharge end of the bath reaching into the gangue receiving chamber and the means for introducing raw shale material into the distillation chamber.

In particular, the European patent application EP 0 395 486 teaches a method for continuous thermal conversion of organic waste, in the form of contaminated waste plastics and worn out vehicle tyres, to the gas-vapour mixture form, in which the charge in closed perforated box containers is introduced into a hot bath, preferably molten lead bath, by means of a conveyer. After transferring the box containers with the charge through the melting zone and the decomposition zone, by means of the same conveyer, the containers with the remaining impurities are removed from the bath, wherein the gaseous products of decomposition are collected through a circular top aperture. The device disclosed in this publication comprises a casing, including a vat and a conical head, a heating system comprising only a multitude of heating pipes surrounding the containers transported on the conveyer, an endless conveyer surrounding the bottom of the vat and constituting, at the same time, the loading device, the charge moving device and the impurities removal device. There is also a product collecting pipeline for collecting the gaseous product by means of a vertical pipe placed in the circular top aperture of the conical head.

The method and device described in the document EP 0 395 486 mentioned above, are particularly difficult and expensive, in an industrial scale execution, owing to the huge, reaching tens of tons, weight of the molten lead bath as well as the complex system for the charge loading and transporting it in closed containers, by means of a single conveyer surrounding the bottom of the vat and also the complicated, and not very effective, heating system requiring a separate bath agitating device to agitate such a big volume of the bath. In particular, these method and device do not present an opportunity to apply a catalyst to improve the process and increase its efficiency as well as the quality of the final product. This process lacks the means to control the displacement and the temperature of the liquid fraction formed while melted charge leaves the containers and undergoes the transformation into the gaseous fraction, whereas it may also form a liquid surface layer, depending on the character of the charge and the temperature of the bath.

This method has never found any practical, industrial application because of its multitude of disadvantages (contamination of the product by lead and problems concerning providing adequate quantities of cheap energy to support the whole process- among others).

Additonally, an apparatus according to the American patent US 1,658,143 (Tripp) and a process according to the American patent US 3,770,419 (Brown) apart from disadvantages of the system described in EP 0 395 486 stemming from the application of the molten lead and complicated construction have disadvantages resulting from the phenomenon of "fouling" by lead, in which moving steel elements (paddles) in contact with lead are covered by this metal because of its low thermal conductivity. On top of this, applied means for introduction of charge in the form of screw conveyors require very precise comminution of the charge, whereas the application of the disclosed mean to remove any remaining solid residue are easily blocked by solidifying lead. In effect these methods have never found any practical, industrial application either.

It is an aim of the present invention to provide an effective method and a highly efficient device, for a large scale industrial process of conversion of various organic waste, particularly highly contaminated waste plastics and worn out tyres, advantageously in the presence of catalyst, to the form of gaseous mixture of simple monomers, whereas the device should not be too heavy.

It is also important to provide the full control over the displacement and the temperature of the liquid fraction and to prevent it from sticking to moving and stationary parts of the device. It is necessary to ensure that decomposition products are suitable to be recycled as raw materials for polymers or liquid fuels or other chemical industry processes or serve directly as fuel for combustion engines, e.g. electric generators.

**The summary of the invention**

These objects are achieved by a method for continuous conversion of worn out vehicle tyres and other organic waste, in particular, highly contaminated waste plastics, in which the charge is liquefied and then cracked giving the product in the gaseous phase, wherein the charge is introduced horizontally into a reactor with a hot bath, in the form of liquid inorganic medium, displaced through the melting zone with the simultaneous cyclical forced movements having the predetermined frequency and the decomposition zone and then the gaseous products of the decomposition are collected at the top and the impurities are removed by means of at least one conveyer, as expressed in claim 1, characterized in that the decomposition reactions are carried out catalytically above the hot bath with at least one layer of the heating pipes, in the liquefied layer of the charge formed around melting elements, advantageously in the form of the system of parallel melting guide bars protruding above the surface of the hot bath, comprising liquid inorganic medium, wherein the charge is horizontally and obliquely, downwards the inlet guide via the loading outlet extending into the feeding throat, introduced above the surface of melting guide bars, and afterwards the charge is displaced along the surface of melting guide bars by means of the thrusting annd combing fingers passing through the guiding and cleaning slots.

The present invention provides an effective and highly efficient large-scale industrial process of conversion of various organic wastes. The special method, conducting the decomposition reactions catalytically in the presence of a novel, cheap and inexpensive catalyst around melting elements provides the full control over the temperature of the liquid fraction, and greatly improves the efficiency the process and the quality of the final product. The decomposition product, in the form of gaseous mixture of simple monomers, is suitable to be recycled as raw material for polymers or liquid fuels or other chemical industry processes or serves directly as fuel for combustion engines, e.g. electric generators. The method of loading, wherein the charge is horizontally and obliquely, downwards the inlet guide, introduced into the reactor, allows to pre-cut only tyres, while the method of displacing the charge along the surface of melting guide bars with the simultaneous cyclical forced movements having the predetermined frequency by means of the thrusting annd combing fingers provides the full control over the displacement of the charge and its liquid fraction and prevents the charge from sticking to moving and stationary parts of the device.

The present invention concerns also a device for conversion of worn out vehicle tyres and other organic waste, in particular, highly contaminated waste plastics, in which the charge is liquefied and then cracked giving the product in the gaseous phase, wherein the charge is introduced horizontally into a reactor with a hot bath, in the form of liquid inorganic medium, displaced through the melting zone with the simultaneous cyclical forced movements having the predetermined frequency and the decomposition zone and then the gaseous products of the decomposition are collected at the top and the impurities are removed by means of at least one conveyer, the said device containing a housing, a heating system, a loading system comprising the separate loading device, a charge displacing system comprising at least one set of urging and cleaning drums to displace the charge with the cyclical forced movements having the predetermined frequency, a product collecting system and an impurities removal system having at least one conveyer, as expressed in claim 10, characterized in that the separate loading device comprises the a press to introduce the charge horizontally and obliquely, downwards the inlet guide via the loading outlet extending into the feeding throat, above the surface of melting guide bars, the charge displacing system comprises at least one set of urging and cleaning drums to displace the charge along the surface of melting guide bars by means of the thrusting and combing fingers passing through the guiding and cleaning slots and the impurities removal system comprises at least two different type conveyers in series arrangement, wherein the first conveyer removes the impurities obliquely upwards above the surface of the bath with at least one layer of the heating pipes.

Advantageous features have been presented in the sub-claims 2-9 and 11-20 accordingly dependent on independent claims 1 and 10.

The novel construction of the housing ensures right isolation and at the same time gives easy access to the interior of the device.

The novel construction of the heating system allows to fully utilising the heating medium energy and its supply to the whole volume of the liquid inorganic medium and the reacting mass and solves the problems concerning providing adequate quantities of cheap energy to support the whole process. It provides the full control over the temperature of the liquid fraction and preventing the reaction mass and impurities from entering between the heating pipes ensures the long life of the bath.

The novel construction of the loading system allows for automatic continuous charging and prevents return sucking of the charge at the return stroke of the thrusting device.

The novel construction of the charge displacing system provides the full control over the displacement of the charge and its liquid fraction and prevents the charge from sticking to moving and stationary parts of the device.

The novel construction of the impurities removal system ensures very efficient continuous removal of the impurities and an easy access to all its parts.

The method and the device according to the present invention have been realized in the industrial scale. According to the present invention, the process of catalytic conversion takes place continuously. The thermo-catalytic reactions in the reaction vessel do not require high pressure or addition of hydrogen. The catalyst is cheap. Spent catalyst is recycled. Plastic wastes and tyres used as the charge do not require comminution (except tyre pre-cutting), purification or fractionation. Only one ecological heating source is used to heat all apparatuses in the technological production line. The output product is of high quality and the waste /by product/ is potentially useful as well.

**Brief description of the drawings**

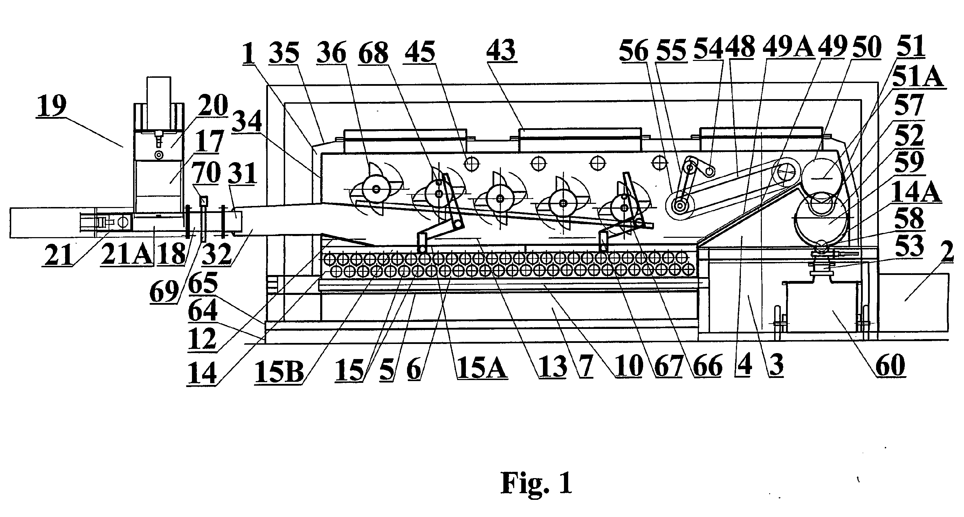

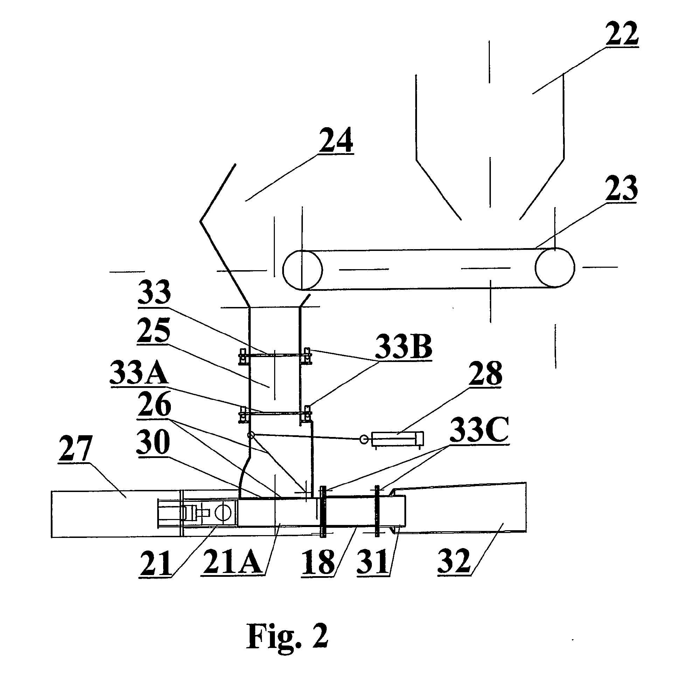

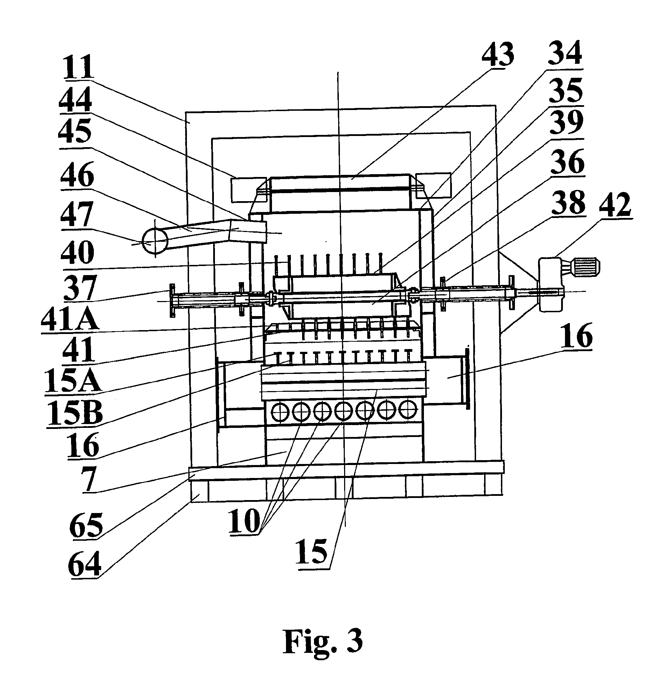

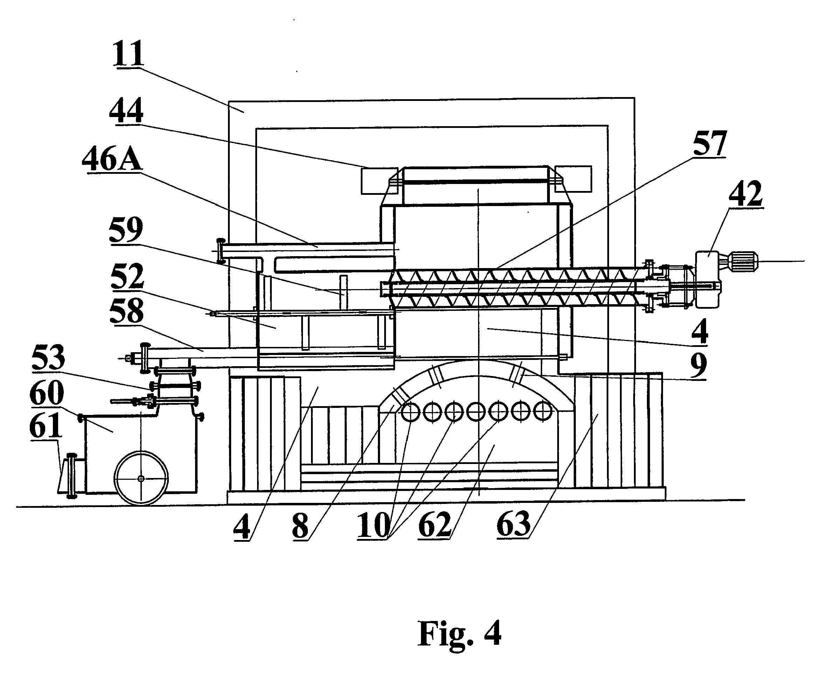

The present invention, both in the category of a method and in the category of a device, will be described in detail below in advantageous embodiment with reference to the attached diagrammatic drawings, where Fig.1 shows the front section view of the present device with the first variant of the loading device, Fig.2 shows the second variant of the loading device, Fig.3 shows the cross section view of the present device marked A-A in the Fig.1, Fig.4 shows the cross section view of the present device marked B-B in the Fig.1.

**Detailed description of the drawings**

As shown in Fig.1 3 and 4, the present device, constituting a reactor, has got the cuboid construction, wherein its housing 1 is in the form of the isolated thermal chamber with the external isolating thermal shield 11. The internal dimensions of the reactor are, for example, as follows: width 1200mm, length 7500mm and height 2100mm. It is placed on the floor plate 65 and on the support frame 64. At the right side of the device (in the Fig.1) there is schematically denoted the fuel source 2. The lower part of the device comprises the combustion chamber 3, closed with the front plate 62 of the vat 6 surrounded by the ceramic lower thermal shield 7 forming the bottom 5 of the vat 6 and isolated by the furnace ceramic thermal shield 63. The combustion chamber 3 is closed from the top by means of the vault 8 having passage openings 9 wherein the upper heating chamber 4 is situated above the combustion chamber 3. The fuel gas is supplied to the combustion chamber 3. Vat 6 contains the hot bath 14 heated by means of the set of longitudinal heating pipes 10 and the set of transverse heating pipes 15, advantageously with the diameter 139 mm, placed inside the bath 14 in several layers, as shown in the picture. The set of transverse heating pipes 15 comprises on its upper surface the charge guiding system in the form of the system of parallel melting guide bars 15A

with a rectangular cross-section supported on vertical guide bar supports 15B. The parallel melting guide bars 15A with a rectangular cross-section vertical guide bar supports 15B constitute at least one set of pressing elements in the form of at least one, preferably two movable sections of melting guide bars 15A driven by means of a crank system comprising a driving pin 68, a driving arm 66 and an engaging pin 67, independently, from one of the urging and cleaning drums 36.

The side heating chambers 16 are situated on both sides of the vat 6 (see Fig.3). The charge 17 is introduced above the melting surface of parallel melting guide bars 15A via press-reactor connector 18 by means of separate loading device 19 for horizontal introduction of the charge 17 into the reactor. In the embodiment of the loading device 19 adapted for manual feeding of the charge 17 into the reactor this device comprises a two-stage press. It comprises preliminary charging piston assembly 20 which simultaneously blocks (from the top) the cylinder unit 21A, after it has been filled up with the charge 17. The second working unit of this device comprises the horizontal thrust piston unit 21 with the cylinder unit 21A, having horizontal thrust at least 5Mpa, preferably at least 8Mpa. The second embodiment of the loading device 19 adapted for automatic feeding of the charge 17 into the reactor has been presented in Fig.2. This device comprises the dispenser 22, for gravitational dropping of the charge 17 onto the feeding conveyer 23, leading to the hopper 24 of the loading device 19, and the vertical lock 25 locked with gate valves 33 having gates 33A sealed by sealing arrangements 33B. It also comprises the charge locking unit 26 and the horizontal thrust single stage hydraulic or pneumatic press 27, having horizontal thrust at least 5MPa, preferably at least 8Mpa. The charge locking unit 26 comprises the motor 28 (usually in the form of a hydraulic power cylinder), the rotary lever 29 and the closing flap 30. Owing to the buffer function of the vertical lock 25 collecting the incoming portions of the charge 17, the dispenser 22 and the feeding conveyer 23 can work in a continuous manner, while the horizontal thrust single stage hydraulic or pneumatic press 27 and the charge locking unit 26, which locks the incoming portions of the charge 17 in the cylinder unit 21A, work in a cyclical manner. In both embodiments the charge 17 is pushed from the cylinder unit 21A to the press-reactor connector 18 having the connecting orifices 33C, and then via the loading outlet 31 into the feeding throat 32 and further to the inlet guide 12 guiding the charge 17 to the space above the parallel melting guide bars 15A.

The loading outlet 31 in both embodiments of the loading device 19, is extended into the feeding throat 32, advantageously at least for the distance equal one third of the diameter of the throat 32, which prevents the charge 17 to be sucked back into the loading outlet 31 at the return stroke of the horizontal thrust piston unit 21. Both the press-reactor connector 18 and the vertical lock 25 are advantageously in the form of a chamber closed at both sides by gate valves 33.

The press-reactor connector 18 comprises a cutting off and controlling gate 69 driven by a hydraulic motor 70.

Above the vat 6 there is the casing 34 of the reactor. The casing 34 and the vat 6 are made of acid- and heat-resistant sheet steel H25N20S2, with the thickness about 10mm. The rigidity of the casing 34 is achieved by means of the reinforcing construction 35, in the form of a grid having the height 100mm and the pitch 130mm x 130mm.

The charge displacing system comprises, in this exemplary embodiment, the system of five urging and cleaning drums 36 arranged in sets, wherein each urging and cleaning drum 36 comprises at least two support shafts, the active support shaft 38 and the passive support shaft 37, the urging and cleaning drum casing 39 with the thrusting and combing fingers 40 and the guiding and cleaning plate 41 with the guiding and cleaning slots 41A and a driving unit 42. The charge displacing system displaces the charge 7 undergoing the transformation into the liquefied charge 13, along the melting surface of parallel melting guide bars 15A, by means of its rotary movement with a predetermined speed, preferably 5 to 10 rev. per min. As illustrated in Fig.1, the thrusting and combing fingers 40 are wedge like in the longitudinal section but they can be rectangular in all sections. The guiding and cleaning slots 41A are designed for the thrusting and combing fingers 40 to adhere to their internal surfaces. To this purpose, they are rectangular in horizontal plane with the dimensions to fit glidingly to the largest cross-sections of the fingers in this plane. While operating, the thrusting and combing fingers 40 completely leave the guiding and cleaning slots 41A of the guiding and cleaning plate 41 wholly freeing themselves from adhering reaction mass in the form of the liquefied charge 13. The shape and dimensions of the thrusting and combing fingers 40 and their distance to the reaction mass determine the amplitudes of their horizontal and vertical movements in the reaction mass, while the number and the arrangement of the fingers placed on the circumference of the urging and cleaning drum casing 39 determines the frequency of the cyclical urging of the mass displacement at a given rotational speed of the urging and cleaning drums 36.

Additionally the device comprises at least one set of pressing elements in the form of at least one, preferably two movable sections of melting guide bars 15A driven by means of a crank system comprising a driving pin 68, a driving arm 66 and an engaging pin 67 independently, from one of the urging and cleaning drums 36.

The casing 34 is closed by means of the covers 43 forming a set of demountable heads, fastened by means of clamps 44, enabling easy assembling and servicing of the device.

The product collecting system comprises a number of the openings 45 in the upper area of the wall of the casing 34, ie. above the liquefied layer of the charge 13, whereas the outlet openings 45 in the upper area of the wall of the casing 34 are situated at the hight of 20 to 500 mm above the layer of the liquefied charge 13 formed around melting elements, advantageously at the hight of 20 to 100 mm above the the layer of the liquefied charge 13, leading to the gaseous product collector 46 of the gaseous product collecting pipeline 47 or to the gaseous product collector 46 ventilating the solid impurities collecting chamber 52.

The impurities removal system comprises the chain conveyer 48 having an adjustable position, in the working mode parallel to the slide assembly 49. The slide assembly 49 preferably comprises on its upper surface a guiding system in the form of the system of parallel guide bars 49A with a rectangular cross-section to guide the remains of the charge 17 at their removal from the bath 14 with their reheating by means of the secondary bath 14A in the saddle 51 of the slide assembly 49. The impurities removal system comprises also the impurities removal unit 50 situated in the saddle 51 of the slide assembly 49, above the mobile solid impurities receptacle 60. The impurities removal system comprises further the collecting lock 53 above the mobile solid impurities receptacle 60, while the chain conveyer 48 comprises the position-adjusting unit including the driving unit 54 with the lever assembly 55, for lifting the front end 56 of the chain conveyer 48.

The impurities removal unit 50 comprises the pushing upper screw conveyer 57 and the pulling lower screw conveyer 58 arranged in series mutually and with the chain conveyer 48 (as shown in Fig.1 and 4). The impurities via collecting lock 53 in the connecting assembly of the solid impurities collecting chamber 52 finally find their way into the solid impurities receptacle 60 with the outlet valve 61.

In the Fig. 1, 2 and 4 one can also follow the realization of the exemplary embodiment of the present invention in the category of a method. The charge can be in the form of worn out tyres of all types of motor vehicles, waste plastics, hard coal, brown coal or other organic waste. The technological process is described, as an example, for worn out tyres and waste polyolefin plastics.

The tyres are stored whole in a warehouse and they undergo pre-cutting. The plastics are delivered in the form of bales and rolls and they are stored in a separate warehouse. They could also be pre-cut or the bales could be loosened.

The charge 17 of waste plastics and pre-cut tyres, in the first embodiments of the loading device 19, is fed in portions (3-6kg) to a two-stroke pneumatic press constituting here the loading device 19. The stream of waste plastics introduced into the present device is between 60 and 100 kg/h for one reaction module. The charge 17 of waste plastics and pre-cut tyres, in the second embodiments of the loading device 19, is continuously fed gravitationally from the dispenser 22 gravitationally dropping the charge 17 onto the feeding conveyer 23 leading to the hopper 24 of the loading device 19, the vertical lock 25, the charge locking unit 26, and the horizontal thrust single stage hydraulic or pneumatic press 27, having horizontal thrust at least 5MPa, preferably at least 8Mpa.

The compressed portion of plastics or a tyre is then introduced by means of a press punch (with a pressure about 10kg/cm$^2$) into the reactor vat, containing molten metal, alloy or other liquid inorganic medium, having at its upper level a guiding system in the form of the system of parallel melting guide bars 15A. In the present example, the liquid inorganic medium comprises the alloy of tin, lead and bismuth., with the mass density no less than 9.6 g/cm$^3$ under the reaction conditions. As the result of a large difference between the mass density of the molten metal and the mass density of the charge 17 (about 1 g/cm$^3$), the introduced plastics and/or pieces of tyres are kept by the forces of buoyancy above the upper layer of the molten metal filling the spaces between movable parallel melting guide bars 15A. It is important that the charge is introduced horizontally and obliquely, downwards the inlet guide 12, introduced above the surface of melting guide bars 15A, and afterwards the charge 17 is displaced along the surface of movable melting guide bars 15A by means of the thrusting and combing fingers (40), whereas the melting guide bars 15A are situated at the upper level of the liquid inorganic medium and partially above its surface, and press down the charge 17 with the frequency of 5 to 10 per min. and with the amplitude of 50 to 100 mm. However they do not protrude above the surface of the liquefied layer of the charge 13 having the thickness of 200 to 600mm, preferably 200 to 300mm. This ensures the uniform displacement of the moving charge and its mixing, prevents its sticking together, equalizes the temperature distribution in the bath, and simultaneously ensures the uniformity of the realized process in the whole volume of the reaction mass. The charge 17 is slowly moved through the reactor in the zone called the melting zone first. In this zone it melts gradually without the oxygen under the influence of heat from the molten metal and system of movable parallel melting guide bars. The liquefied charge 13 with the mass density about 0.8 g/cm$^3$ keeps above the melting surface, forming there a layer of organic liquid having small thickness. There is a catalyst in this layer and on its surface in the form of the catalyst pieces, with the size 0.05 to 0.10mm, comprising pieces of natural zeolitic bauxites with granules of aluminium, advantageously with the size 2-30$\mu$m placed on them in a high-temperature spraying process, above 2000°C. In the presence of the catalyst and under the influence of temperature, the process of bond cleavage takes place in the polymers, components of the charge. In the case of rubber waste, the decomposition of different types of rubber leads to the mixture of monomers, from which it has been manufactured or to the mixture of hydrocarbons, both saturated and non-saturated, depending on the time and the temperature of the processes in the reactor. In the decomposition of the polyolefin waste only the mixture of hydrocarbons from methane $CH_4$ to $C_{24}H_{50}$ is obtained. In the process temperature (350-450 °C) the products comprise the gas/vapour phase. It is collected from the reactor through the outlet openings 45 connected to the collector 46, and via the collector 46 to the pipeline 47 and to a cooling unit. The heat from the cooling water is recovered by using it to warm the storage bins and, possibly, also the warehouses and the production facilities.

The solid impurities, not melted during the process (in the form of stones, metal parts, wood etc.) are removed, by means of chain conveyer 48 from the melting zone of the reactor to the impurities removal zone, with their continuous heating, along the slide assembly 49, and further gravitationally moved into the impurities removal unit situated in the saddle 51 of the slide assembly 49, and then in turn to the solid impurities receptacle 60. The impurities receptacle 60 can be changed, while the reactor is working, without stopping the screw conveyers for the time of this operation, owing to the presence of the collecting lock 53 in the connecting assembly of the solid impurities collecting chamber 52.

The reaction module is heated with combustion gases generated in the process of gasification of bio-fuel, for example sawdust from coniferous trees. The fuel source 2 of the gases is a combustion gas generator comprising a sawdust (or other bio-fuel) storage bin, a sawdust feeder, a gasification unit (retort) and pipes leading to a burner in the combustion chamber 3 the reactor module. The hot gases heat the reactor and cause melting of the metal (salts or hydroxides) constituting the bath medium enabling very effective melting of the charge without air to convert it to the mixture of light hydrocarbons and to vaporize the product. The heat passes to the bath from the multitude of the heating pipes 15, placed inside the bath 14 in layers and constituting the main heating surface. There is at least one layer of the heating pipes 15, placed in bottom area of the reactor. They form the internal heat exchanger of the reactor. The whole reactor is surrounded with the ceramic material forming the thermal shield isolating it from the external influence.

As could be appreciated by a person skilled in art, the present invention is not limited to the exemplary embodiments discussed above. It covers all changes and modifications within the scope of attached claims.

## Claims

1.  A method for continuous conversion of worn out vehicle tyres and other organic waste, in particular, highly contaminated waste plastics, in which a charge (17) is liquefied and then cracked giving products in the gaseous phase, wherein the charge (17) is introduced horizontally into a reactor with a hot bath (14) in the form of a liquid inorganic medium,

the charge (17) is displaced through a melting zone and simultaneously subjected to cyclical forced movements having a predetermined frequency and the charge (17) is displaced through a decomposition zone and

then the gaseous products of the decomposition are collected at the top and impurities are removed by means of at least one conveyer (47, 57, 58), **characterized in that**

the decomposition reactions are carried out catalytically in the liquefied layer of the charge (13) formed around melting elements for melting the charge (17) above the hot bath (14) with at least one layer of heating pipes (15) inside the bath (14),

the melting elements being advantageously in the form of a system of parallel melting guide bars (15A) protruding above the surface of the hot bath (14), wherein

the charge (17) is horizontally and obliquely introduced downwards the inlet guide (12) via the loading outlet (31) extending into the feeding throat (32), and above the surface of melting guide bars (15A), and afterwards the charge (17) is displaced along the surface of the melting guide bars (15A) by means of thrusting and combing fingers (40) passing through guiding and cleaning slots (41 A).

2. A method according to claim 1, **characterized in that** the thickness of the layer of the liquefied charge (13) formed around melting elements, advantageously in the form of the system of parallel melting guide bars (15A) protruding above the surface of the hot bath (14), comprising liquid inorganic medium is kept at a level of 200 to 600 mm, advantageously 200 to 300 mm.

3. A method according to claim 1, **characterised in that** the charge (17) is introduced above the surface of melting guide bars (15A) protruding above the surface of the inorganic medium, preferably in the form of pre-cut waste plastics and tyres, by means of its indirect pushing by means the separate loading device (19), preferably a two-stage press, preferably under the pressure of at least 5 Mpa, most preferably under the pressure of at least 8 Mpa, or by means of transporting it by the feeding conveyer (23) into the hopper (24) of the loading device (19), and pushing it horizontally, preferably by means of a single stage press, preferably under the pressure of at least 5 Mpa, most preferably under the pressure of at least 8 Mpa.

4. A method according to claim 1, **characterized in that** the hot bath (14) in the form of liquid inorganic medium constitutes an alloy of tin, lead and bismuth, preferably containing at least 60% tin and at least 30% lead, or a mixture of inorganic salts and/or alkaline metal hydroxides and /or alkaline earths.

5. A method according to claim 1, **characterized in that** the reactions of decomposition are carried out in the presence of the catalyst pieces with the size 0.05 to 0.10mm, preferably the catalyst pieces of natural zeolitic bauxites with granules of aluminium, advantageously with the size 2-30μm, placed on them in a high-temperature spraying process, above 2000°C, and are carried out in the temperature 390 to 540°C, under the atmospheric pressure.

6. A method according to claim 1, **characterized in that** the liquid inorganic medium is heated directly by means of at least one set of the transverse heating pipes (15) and the remains of the charge (17) moved beyond the liquid inorganic medium are heated indirectly by means of the heating medium in the combustion chamber (3).

7. A method according to claim 1, **characterized in that** after leaving the feeding throat (32) the charge (17) is displaced along the surface of melting guide bars (15A), with the simultaneous cyclical forced movements having the predetermined frequency and predetermined amplitudes of the horizontal and vertical displacement of urging elements, by means of at least one set of urging and cleaning drums (36) with the predetermined rotational speed, advantageously 5 to 10 rev./min, preferably by means of at least one, advantageously three, the most advantageously five urging and cleaning drums (36) arranged in sets.

8. A method according to claim 1, **characterized in that** after leaving the feeding throat (32) the charge (17) is displaced along the surface of melting guide bars (15A), with the simultaneous cyclical forced pressing down having the predetermined frequency, advantageously 5 to 10 /min, and predetermined amplitudes of the vertical displacement of pressing elements, advantageously 50 to 100 mm, by means of at least one or two movable sections of melting guide bars (15).

9. A method according to claim 1, **characterized in that** remains of the charge (17) on the surface of the hot bath (14) with solid impurities are removed upwards from the decomposition zone by means of the chain conveyer (48), gravitationally introduced into the impurities removal unit (50) situated in the saddle (51) of the slide assembly (49), and then to the mobile solid impurities receptacle (60).

10. A device for conversion of worn out vehicle tyres and other organic waste, in particular, highly contaminated waste plastics, in which
a charge (17) is liquefied and then cracked giving products in the gaseous phase, wherein
the charge (17) is introduced horizontally into a reactor with a hot bath (14) comprising a liquid inorganic medium,

the charge (17) is displaced through a melting zone and simultaneously subjected to cyclical forced movements having a predetermined frequency and the charge (17) is displaced through a decomposition zone and

then the gaseous products of the decomposition are collected at the top and impurities are removed by means of at least one conveyer (48, 57, 58), the said device containing

a housing (1),

a heating system,

a loading system comprising a separate loading device (19),

a charge displacing system comprising at least one set of urging and cleaning drums (36) to displace the charge (17) with the cyclical forced movements having the predetermined frequency,

a product collecting system and

an impurities removal system having at least one conveyer (48, 57, 58),

**characterized in that**

the separate loading device (19) comprises a press to introduce the charge (17) horizontally and obliquely, downwards the inlet guide (12), and above the surface of melting guide bars (15A) for melting the charge (17),

the charge (17) displacing system comprises at least one set of urging and cleaning drums (36) to displace the charge (17) along the surface of the melting guide bars (15A) by means of thrusting and combing fingers (40) passing through the guiding and cleaning slots (41A) and

the impurities removal system comprises at least two different type conveyers in series arrangement, wherein the first conveyer (48) removes the impurities obliquely upwards above the surface of the bath (14) with at least on layer of heating pipes (15) inside the bath (14).

11. A device according to claim 10, **characterized in that** the housing (1) is in the form of the isolating thermal shield (11) surrounding the bottom (5) of the steel vat (6) and the casing (34) with the covers (43), whereby each cover (43) is fastened by means of the set of clamps (44).

12. A device according to claim 10, **characterized in that** the heating system comprises the fuel source (2), the combustion chamber (3), upper heating chamber (4), side heating chambers (16), and at least one set of the heating pipes (15), placed inside the bath (14), which comprises on its upper surface the charge (17) guiding system in the form of the system of parallel melting guide bars (15A) with a rectangular cross-section.

13. A device according to claim 10, **characterized in that** the separate loading device (19) to introduce the charge (17) horizontally, introducing the charge (17), via: the press-reactor connector (18) comprising the cutting off and controlling gate (69), loading outlet (31) extending into the feeding throat (32) advantageously for the distance equal at least one third of the diameter of the throat (32), and the throat (32), preferably in the form of pre-cut waste plastics and tyres, above the melting surface of melting guide bars (15A), comprises a two-stage press, preferably with the horizontal thrust of at least 5 MPa, most preferably under the pressure of at least 8 Mpa.

14. A device according to claim 10, **characterized in that** the loading device (19) to introduce the charge (17) horizontally, via: the press-reactor connector (18) comprising the cutting off and controlling gate (69), the loading outlet (31) extending into the feeding throat (32) advantageously for the distance equal at least one third of the diameter of the throat (32), and the throat (32), preferably in the form of pre-cut waste plastics and tyres, above the melting surface of melting guide bars (15A), comprises the dispenser (22), the feeding conveyer (23) leading to the hopper (24) of the loading device (19), the vertical lock (25), the charge locking unit (26) advantageously comprising the motor (28) and rotary lever (29) and the closing flap (30), and the horizontally pushing single stage press (27), preferably with the horizontal thrust of at least 5 MPa, most preferably under the pressure of at least 8 Mpa.

15. A device according to claim 13 or 14, **characterized in that** the press-reactor connector (18) and the vertical lock (25) are both in the form of a chamber closed from both sides by means of gate valves (33).

16. A device according to claim 10, **characterized in that** the charge displacing system comprises the system of at least one, advantageously three, the most advantageously five urging and cleaning drums (36) arranged in sets, whereby each urging and cleaning drum (36) comprises at least two support shafts, the active support shaft (38) and the passive support shaft (37), the urging and cleaning drum casing (39) with the thrusting and combing fingers (40) and the guiding and cleaning plate (41) with the guiding and cleaning slots (41 A) and a driving unit (42).

17. A device according to claim 10, **characterized in that** it comprises pressing elements, by means of at least one, preferably two movable sections of melting guide bars (15), whereby each set of pressing elements is driven, independently, from one of the urging and cleaning drums (36), by means of a crank system, advantageously comprising a driving pin (68), a driving arm (66) and an engaging pin (67).

**18.** A device according to claim 10, **characterized in that** the product collecting system comprises at least one outlet opening (45), preferably at least two outlet openings (45) in the upper area of the wall of the casing (34), which are situated at the hight of 20 to 500 mm above the layer of the liquefied charge (13) formed around melting elements, advantageously at the hight of 20 to 100 mm above the the layer of the liquefied charge (13), leading to a gaseous product collector (46) of the gaseous product collecting pipeline (47).

**19.** A device according to claim 10, **characterized in that** the impurities removal system comprises the chain conveyer (48) with an adjustable position advantageously comprising the position adjusting unit including the driving unit (54) with the lever assembly (55) for lifting the front end (56) of the chain conveyer (48), in the working mode parallel in the slide assembly (49) advantageously comprising on its upper surface the guiding system in the form of the system of parallel guide bars (49A) with a rectangular cross-section, and the impurities removal unit (50) advantageously situated in the saddle (51) of the slide assembly (49), above the mobile solid impurities receptacle (60) and the collecting lock (53) above the mobile solid impurities receptacle (60).

**20.** A device according to claim 18, **characterized in that** the impurities removal unit (50) comprises the upper screw conveyer (57) and the lower screw conveyer (58) arranged in series mutually and with the chain conveyer (48), and preferably at least one agitator (59) situated above the upper screw conveyer (57) and/or the lower screw conveyer (58).

## Patentansprüche

**1.** Verfahren zur kontinuierlichen Umwandlung von verschlissenen Fahrzeugreifen und anderem organischen Abfall, insbesondere stark kontaminiertem Kunststoffabfall, bei dem
eine Ladung (17) verflüssigt und dann aufgespalten wird, so dass Produkte in der gasförmigen Phase entstehen, wobei
die Ladung (17) horizontal in einen Reaktor mit einem Warmbad (14) in Form eines flüssigen anorganischen Mediums eingeleitet wird,
die Ladung (17) durch eine Schmelzzone verschoben und gleichzeitig zyklischen zwangsweisen Bewegungen mit einer vorgegebenen Frequenz ausgesetzt wird, und
die Ladung (17) durch eine Zersetzungszone verschoben wird, und
dann die gasförmigen Produkte der Zersetzung an dem oberen Ende aufgefangen werden und Verunreinigungen mittels wenigstens einer Fördereinrichtung (47, 57, 58) entfernt werden,
**dadurch gekennzeichnet, dass**
die Zersetzungsreaktionen katalytisch in der verflüssigten Schicht der Ladung (13) ausgeführt werden, die um Schmelzelemente herum zum Schmelzen der Ladung (17) oberhalb des Warmbades (14) mit wenigstens einer Schicht von Heizrohren (15) im Inneren des Bades (14) ausgebildet ist,
die Schmelzelemente vorteilhafterweise die Form eines Systems paralleler Schmelz-Leitschienen (15A) haben, die über die Oberfläche des Warmbades (14) vorstehen, wobei
die Ladung (17) über den Beschickungsauslass (31), der sich in die Zuführöffnung (32) hinein erstreckt, und oberhalb der Oberfläche der Schmelz-Leitschienen (15A) horizontal und schräg die Einlassführung hinunter eingeleitet wird, und
danach die Ladung (17) entlang der Oberfläche der Schmelz-Führungsschienen (15A) mittels Schiebe- und Kämmfingern (40) verschoben wird, die durch Führungs- und Reinigungs-Schlitze (41A) hindurchtreten.

**2.** Verfahren nach Anspruch 1, **dadurch gekennzeichnet, dass** die Dicke der Schicht der verflüssigten Ladung (13), die um Schmelzelemente herum ausgebildet wird, die vorteilhafterweise die Form des Systems paralleler Schmelz-Führungsschienen (15A) haben, die über die Oberfläche des Warmbades (14) vorstehen, das flüssiges anorganisches Medium umfasst, auf einem Pegel von 200 bis 600 mm, vorteilhafterweise 200 bis 300 mm, gehalten wird.

**3.** Verfahren nach Anspruch 1, **dadurch gekennzeichnet, dass** die Ladung (17) oberhalb der Oberfläche der Schmelz-Führungsschienen (15A), die über die Oberfläche des anorganischen Mediums vorstehen, vorzugsweise in Form von vorgeschnittenem Kunststoffabfall und Reifen eingeleitet wird, indem sie indirekt mittels der separaten Beschickungsvorrichtung (19), vorzugsweise einer zweistufigen Presse, vorzugsweise unter dem Druck von wenigstens 5 MPa, am besten unter dem Druck von wenigstens 8 MPa geschoben wird, oder indem sie durch die Zuführ-Fördereinrichtung (23) in den Trichter (24) der Beschickungsvorrichtung (19) transportiert wird und vorzugsweise mittels einer einstufigen Presse vorzugsweise unter dem Druck von wenigstens 5 MPa, am besten unter dem Druck von wenigstens 8 MPa, horizontal gedrückt wird.

**4.** Verfahren nach Anspruch 1, **dadurch gekennzeichnet, dass** das Warmbad (14) in Form von flüssigem anorganischen Medium eine Legierung aus Zinn, Blei und Wismut, die vorzugsweise wenigstens 60 % Zinn und wenigstens 30 % Blei enthält, oder eine Mischung aus anorganischen Salzen und/oder Alkalimetall-Hydroxiden und/oder Erdalkalien bildet.

5. Verfahren nach Anspruch 1, **dadurch gekennzeichnet, dass** die Reaktionen der Zersetzung in Gegenwart der Katalysatorstücke mit der Größe von 0,5 bis 0,10 mm, vorzugsweise der Katalysatorstücke aus natürlichen zeolithischen Bauxiten mit Körnchen aus Aluminium, vorzugsweise mit der Größe von 20 bis 30 μm, die in einem Hochtemperatur-Spritzprozess bei über 2000 °C auf sie aufgebracht werden, ausgeführt werden und unter atmosphärischem Druck bei der Temperatur von 390 bis 540 °C ausgeführt werden.

6. Verfahren nach Anspruch 1, **dadurch gekennzeichnet, dass** das flüssige anorganische Medium mittels einer Gruppe der Quer-Heizrohre (15) direkt erhitzt wird und die über das flüssige anorganische Medium hinausbewegten Reste der Ladung (17) indirekt mittels des Heizmediums in der Brennkammer (3) erhitzt werden.

7. Verfahren nach Anspruch 1, **dadurch gekennzeichnet, dass** nach dem Austreten aus der Einleitöffnung (32) die Ladung (17) entlang der Oberfläche von Schmelz-Leitschienen (15A) mit den simultanen zyklischen zwangsweisen Bewegungen mit der vorgegebenen Frequenz und vorgegebenen Amplituden horizontaler und vertikaler Verschiebung von Druckelementen mittels wenigstens einer Gruppe von Druck- und Reinigungswalzen (36) mit der vorgegebenen Drehgeschwindigkeit von vorteilhafterweise 5 bis 10 U/min vorzugsweise mittels wenigstens einer, vorzugsweise drei und am besten fünf Druck- und Reinigungstrommeln (36), die in Gruppen angeordnet sind, verschoben werden.

8. Verfahren nach Anspruch 1, **dadurch gekennzeichnet, dass** nach dem Austreten aus der Einleitöffnung (32) die Ladung (17) entlang der Oberfläche der Schmelz-Führungsschienen (15A) mit dem simultanen zyklischen zwangsweisen Pressen nach unten mit der vorgegebenen Frequenz, vorzugsweise 5 bis 10 U/min, und vorgegebenen Amplituden der vertikalen Verschiebung von Presselementen, vorzugsweise 50 bis 100 mm mittels wenigstens eines oder zweier beweglicher Abschnitte von Schmelz-Führungsschienen (15) verschoben wird.

9. Verfahren nach Anspruch 1, **dadurch gekennzeichnet, dass** die Reste der Ladung (17) auf der Oberfläche des Warmbades (14) mit festen Verunreinigungen aus der Zersetzungszone mittels der Kettenfördereinrichtung (48) nach oben entfernt werden, durch Schwerkraft in die Verunreinigungs-Entfernungseinheit (50), die sich im Sattel (51) der Gleitbaugruppe (49) befindet, und dann in den beweglichen Behälter (60) für feste Verunreinigungen eingeleitet werden.

10. Vorrichtung zum Umwandeln von verschlissenen Fahrzeugreifen und anderem organischen Abfall, insbesondere stark kontaminiertem Kunststoffabfall, in der
eine Ladung (17) verflüssigt und dann aufgespalten wird, so dass Produkte in der gasförmigen Phase entstehen, wobei
die Ladung (17) horizontal in einen Reaktor mit einem Warmbad (14) eingeleitet wird, das ein flüssiges anorganisches Medium umfasst,
die Ladung (17) durch eine Schmelzzone verschoben und gleichzeitig zyklischen zwangsweisen Bewegungen mit einer vorgegebenen Frequenz ausgesetzt wird, und
die Ladung (17) durch eine Zersetzungszone verschoben wird, und
dann die gasförmigen Produkte der Zersetzung an dem oberen Ende aufgefangen werden und Verunreinigungen mittels wenigstens einer Fördereinrichtung (48, 57, 58) entfernt werden, wobei die Vorrichtung enthält
ein Gehäuse (1),
ein Heizsystem,
ein Beschickungssystem, das eine separate Beschickungsvorrichtung (19) umfasst,
ein Ladungs-Verschiebungssystem, das wenigstens eine Gruppe von Drück-und-Reinigungs-Walzen (36) zum Verschieben der Ladung (17) mit den zyklischen zwangsweisen Bewegungen mit der vorgegebenen Frequenz umfasst,
ein Produkt-Auffangsystem, und
ein Verunreinigungs-Entfernungssystem mit wenigstens einer Fördereinrichtung (48, 57, 58),
**dadurch gekennzeichnet, dass**
die separate Beschickungsvorrichtung (19) eine Presse umfasst, mit der die Ladung oberhalb der Oberfläche von Schmelz-Leitschienen (15A) zum Schmelzen der Ladung (17) horizontal und schräg die Einleitführung (15) hinunter eingeleitet wird,
das System zum Verschieben der Ladung (17) wenigstens eine Gruppe von Drück-und-Reinigungs-Walzen (36) umfasst, mit denen die Ladung (17) entlang der Oberfläche der Schmelz-Leitschienen (15A) mittels Schiebe- und Kämmfingern (40A) verschoben wird, die durch die Leit-und-Reinigungs-Schlitze (41A) hindurch treten, und
das Verunreinigungs-Entfernungssystem wenigstens zwei verschiedene Typen von Fördereinrichtungen in Reihenanordnung umfasst, wobei die erste Fördereinrichtung die Verunreinigungen schräg nach oben über die Oberfläche des Bades (14) entfernt, und sich wenigstens eine Schicht von Heizrohren (15) im Inneren des Bades (14) befindet.

11. Vorrichtung nach Anspruch 10, **dadurch gekennzeichnet, dass** das Gehäuse (1) die Form der isolierenden Wärmeabschirmung (11) hat, die den Boden (5) des Stahltrogs (6) und das Gehäuse (34) mit den Abdeckungen (43) umgibt, wobei jede Abdeckkung (43) mittels der Gruppe von Klemmen (44) befestigt ist.

12. Vorrichtung nach Anspruch 10, **dadurch gekennzeichnet, dass** das Heizsystem die Brennstoffquelle (2), die Brennkammer (3), die obere Heizkammer (4), seitliche Heizkammern (16) und wenigstens eine Gruppe der Heizrohre (15) umfasst, die im Inneren des Bades (14) angeordnet sind, das an seiner oberen Fläche das System zum Leiten der Ladung (17) in Form des Systems paralleler Schmelz-Leitschienen (15A) mit einem rechteckigen Querschnitt umfasst.

13. Vorrichtung nach Anspruch 10, **dadurch gekennzeichnet, dass** die separate Beschickungsvorrichtung (19), die die Ladung (17) horizontal einleitet und dabei die Ladung (17) über den Press-Reaktorverbinder (18), der den Abschneid- und Steuer-Schieber (69) umfasst, den Beschickungslauslass (31), der sich vorteilhafterweise um die Stecke in die Einleitöffnung (32) hinein erstreckt, die wenigstens einem Drittel des Durchmessers der Öffnung (32) gleich ist, und die Öffnung (32), vorzugsweise in Form von vorgeschnittenem Kunststoffabfall und Reifen oberhalb der Schmelzfläche von Schmelz-Leitschienen (15A) einleitet, eine zweistufige Presse umfasst, vorzugsweise mit dem horizontalen Schub von wenigstens 5 MPa und am besten unter dem Druck von wenigstens 8 MPa.

14. Vorrichtung nach Anspruch 10, **dadurch gekennzeichnet, dass** die Beschickungsvorrichtung (19), die die Ladung (17) horizontal über den Press-Reaktorverbinder (18), der den Abschneid- und Steuer-Schieber (69) umfasst, den Beschickungsauslass (31), der sich vorteilhafterweise um die Strecke in die Einleitöffnung (32) hinein erstreckt, die wenigstens einem Drittel des Durchmessers der Öffnung (32) gleich ist, und die Öffnung (32) vorzugsweise in Form von vorgeschnittenem Kunststoffabfall und Reifen über der Schmelzfläche von Schmelz-Leitschienen (15A) einleitet, die Abgabeeinrichtung (22), die Zuführ-Fördereinrichtung (23), die zu dem Trichter (24) der Beschickungsvorrichtung (19) führt, die vertikale Schleuse (25), die Ladungs-Abriegelreinheit (26), die vorzugsweise den Motor (28), den Drehhebel (29) und die Schließklappe (30) umfasst, und die horizontale einstufige Schiebepresse (27) umfasst, vorzugsweise mit dem horizontalen Schub von wenigstens 5 MPa, am besten unter dem Druck von wenigstens 8MPa.

15. Vorrichtung nach Anspruch 13 oder 14, **dadurch gekennzeichnet, dass** der Press-Reaktorverbinder (18) und die vertikale Schleuse (25) beide die Form einer Kammer haben, die mittels Absperrschiebern (33) von beiden Seiten geschlossen ist.

16. Vorrichtung nach Anspruch 10, **dadurch gekennzeichnet, dass** das Ladungs-Verschiebesystem das System wenigstens einer, vorteilhafterweise drei und am besten fünf, Drück-und-Reinigungs-Trommeln (36) umfasst, die in Gruppen angeordnet sind, wobei jede Drück-und-Reinigungs-Trommel (36) wenigstens zwei Tragewellen, das heißt die aktive Tragewelle (38) und die passive Tragewelle (37), das Drück-und-Reinigungs-Trommel-Gehäuse (39) mit den Schiebe-und-Kämm-Fingern (40) und die Leit- und Reinigungsplatte (41) mit den Leit- und Reinigungsschlitzen (41A) sowie eine Antriebseinheit (42) umfasst.

17. Vorrichtung nach Anspruch 10, **dadurch gekennzeichnet, dass** sie Presselemente in Form von wenigstens einem, vorzugsweise zwei beweglichen Abschnitten von Schmelz-Führungsschienen (19) umfasst, wobei jede Gruppe von Presselementen unabhängig von einer der Drück-und-Reinigungs-Trommeln (36) mittels eines Kurbelsystems angetrieben wird, das vorteilhafterweise einen Antriebszapfen (68), einen Antriebsarm (66) und einen Eingriffszapfen (67) umfasst.

18. Vorrichtung nach Anspruch 10, **dadurch gekennzeichnet, dass** das Produktauffangsystem wenigstens eine Auslassöffnung (45), vorzugsweise wenigstens zwei Auslassöffnungen (45), im oberen Bereich der Wand des Gehäuses (34) umfasst, die sich in der Höhe 20 bis 500 mm über der Schicht der verflüssigten Ladung (13) befinden, die um Schmelzelemente herum ausgebildet ist, vorzugsweise in der Höhe von 20 bis 100 mm über der Schicht der verflüssigten Ladung (13), und zu einer Auffangeinrichtung (46) für gasförmige Erzeugnisse der Auffang-Rohrleitung (47) für gasförmige Erzeugnisse führen.

19. Vorrichtung nach Anspruch 10, **dadurch gekennzeichnet, dass** das Verunreinigungs-Entfernungssystem die Kettenfördereinrichtung (48) mit einer verstellbaren Position umfasst, die vorteilhafterweise die Positionsstelleinheit umfasst, die die Antriebseinheit (54) mit der Hebebaugruppe (55) enthält, mit der das vordere Ende (56) der Kettenfördereinrichtung (48), im Arbeitsmodus parallel zu der Gleitbaugruppe (49), die vorteilhafterweise an ihrer Oberseite das Leitsystem in Form des Systems paralleler Leitschienen (49A) mit einem rechteckigen Querschnitt umfasst, und die Verunreinigungs-Entfernungseinheit (50), die sich vorteilhafterweise im Sattel (51) der Gleitbaugruppe (49) befindet, über den beweglichen Behälter (60) für feste Verunreinigungen und die Auffangschleuse (53) über den beweglichen Behälter (60) für feste Verunreinigungen angehoben werden.

**20.** Vorrichtung nach Anspruch 18, **dadurch gekennzeichnet, dass** die Verunreinigungs-Entfernungseinheit (50) den oberen Schneckenförderer (57) und den unteren Schneckenförderer (58), die in Reihe zueinander und zu der Kettenfördereinrichtung (48) angeordnet sind, und vorzugsweise wenigstens einen Mischer (59) umfasst, der sich über dem oberen Schneckenförderer (57) und/oder dem unteren Schneckenförderer (58) befindet.

## Revendications

**1.** Procédé de recyclage en continu de pneus de véhicules usagés et d'autres déchets organiques, en particulier de déchets de matières plastiques hautement contaminées, dans lequel
une charge (17) est liquéfiée, puis soumise à un craquage pour donner des produits en phase gazeuse,
la charge (17) étant introduite horizontalement dans un réacteur comportant un bain chaud (14) sous la forme d'un milieu inorganique liquide,
la charge (17) étant déplacée à travers une zone de fusion tout en étant soumise à des mouvements forcés cycliques ayant une fréquence prédéterminée, et
la charge (17) étant déplacée à travers une zone de décomposition,
après quoi les produits gazeux de la décomposition sont récupérés en partie supérieure et les impuretés sont enlevées au moyen d'au moins un convoyeur (47, 57, 58),
**caractérisé en ce que**
les réactions de décomposition sont réalisées par voie catalytique dans la couche liquéfiée de la charge (13) formée autour d'éléments de fusion pour faire fondre la charge (17) au-dessus du bain chaud (14) à l'intérieur duquel il est prévu au moins une couche de tuyaux chauffants (15),
les éléments de fusion se présentent avantageusement sous la forme d'un système de barres de guidage de fusion parallèles (15A) qui dépassent au-dessus de la surface du bain chaud (14),
la charge (17) est introduite horizontalement et obliquement vers le bas le long du guide d'entrée (12) par l'intermédiaire de la sortie de chargement (31) qui s'étend jusque dans la goulotte d'amenée (32), et au-dessus de la surface des barres de guidage de fusion (15A), et
la charge (17) est ensuite déplacée le long de la surface des barres de guidage de fusion (15A) au moyen de doigts de poussée et de peignage (40) passant à travers des fentes de guidage et de nettoyage (41A).

**2.** Procédé selon la revendication 1, **caractérisé en ce que** l'épaisseur de la couche de la charge liquéfiée (13) formée autour des éléments de fusion qui se présentent avantageusement sous la forme du système de barres de guidage de fusion parallèles (15A) dépassant au-dessus de la surface du bain chaud (14) qui comprend un milieu inorganique liquide est maintenue à un niveau de 200 à 600 mm, avantageusement de 200 à 300 mm.

**3.** Procédé selon la revendication 1, **caractérisé en ce que** la charge (17) est introduite au-dessus de la surface des barres de guidage de fusion (15A) dépassant au-dessus de la surface du milieu inorganique, de préférence sous la forme de déchets de matières plastiques et de pneus prédécoupés, en étant poussée indirectement au moyen du dispositif de chargement séparé (19) qui se présente de préférence sous la forme d'une presse à deux étages, de préférence à la pression d'au moins 5 MPa, très préférablement à la pression d'au moins 8 MPa, ou en étant transportée par le convoyeur d'amenée (23) dans la trémie (24) du dispositif de chargement (19) et poussée horizontalement, de préférence au moyen d'une presse à un seul étage, de préférence à la pression d'au moins 5 PMa, très préférablement à la pression d'au moins 8 MPa.

**4.** Procédé selon la revendication 1, **caractérisé en ce que** le bain chaud (14) qui se présente sous la forme d'un milieu inorganique liquide est constitué d'un alliage d'étain, de plomb et de bismuth contenant de préférence au moins 60% d'étain et au moins 30% de plomb, ou d'un mélange de sels inorganiques et/ou d'hydroxydes de métaux alcalins et/ou de terres alcalines.

**5.** Procédé selon la revendication 1, **caractérisé en ce que** les réactions de décomposition sont réalisées en présence de fragments de catalyseur ayant une taille de 0,05 à 0,10 mm, de préférence des fragments de catalyseur de bauxites zéolitiques naturelles sur lesquels sont placés des granules d'aluminium ayant avantageusement une taille de 2-30 $\mu m$, au cours d'un processus de pulvérisation à température élevée supérieure à 2000°C, et à la température de 390 à 450°C à la pression atmosphérique.

**6.** Procédé selon la revendication 1, **caractérisé en ce que** le milieu inorganique liquide est chauffé directement au moyen d'au moins un groupe de tuyaux chauffants transversaux (15), et les résidus de la charge (17) amenés au-delà du milieu inorganique liquide sont chauffés indirectement au moyen du milieu chauffant dans la chambre de combustion (3).

**7.** Procédé selon la revendication 1, **caractérisé en ce qu'après avoir quitté la goulotte d'amenée (32), la charge (17) est déplacée le long de la surface des barres de guidage de fusion (15A), grâce aux mouvements forcés cycliques simultanés ayant la fréquence prédéterminée et les amplitudes prédéterminées du déplacement horizontal et vertical d'éléments de sollicitation, au moyen d'au moins un groupe de tambours de sollicitation et de nettoyage (36) à la vitesse de rotation prédéterminée, avantageusement de 5 à 10 tr/min, de préférence au moyen d'au moins un, avantageusement trois, très avantageusement cinq, tambours de sollicitation et de nettoyage (36) disposés en groupes.

8. Procédé selon la revendication 1, **caractérisé en ce qu'**après avoir quitté la goulotte d'amenée (32), la charge (17) est déplacée le long de la surface des barres de guidage de fusion (15A), grâce à la pression vers le bas forcée cyclique simultanée ayant la fréquence prédéterminée, avantageusement de 5 à 10/min, et les amplitudes prédéterminées du déplacement vertical d'éléments de pression, avantageusement de 50 à 100 mm, au moyen d'au moins une ou deux parties mobiles de barres de guidage de fusion

9. Procédé selon la revendication 1, **caractérisé en ce que** des résidus de la charge (17) à la surface du bain chaud (14) comportant des impuretés solides sont remontés de la zone de composition au moyen du convoyeur à chaîne (48), introduits par gravité dans l'unité d'enlèvement d'impuretés (50) située dans le sabot d'appui (51) de l'ensemble coulissant (49), puis transférés au réceptacle mobile d'impuretés solides (60).

10. Dispositif de recyclage de pneus de véhicules usagés et d'autres déchets organiques, en particulier de déchets de matières plastiques hautement contaminées, dans lequel
une charge (17) est liquéfiée, puis soumise à un craquage pour donner des produits en phase gazeuse,
la charge (17) étant introduite horizontalement dans un réacteur contenant un bain chaud (14) comprenant un milieu inorganique liquide,
la charge (17) étant déplacée à travers une zone de fusion tout en étant soumise à des mouvements forcés cycliques ayant une fréquence prédéterminée, et
la charge (17) étant déplacée à travers une zone de décomposition,
après quoi les produits gazeux de la décomposition sont récupérés en partie supérieure et les impuretés sont enlevées au moyen d'au moins un convoyeur (48, 57, 58), ledit dispositif comprenant
un carter (1),
un système de chauffage,
un système de chargement comprenant un dispositif de chargement séparé (19),
un système de déplacement de charge comprenant au moins un groupe de tambours de sollicitation et de nettoyage (36) pour déplacer la charge (17) grâce aux mouvements forcés cycliques ayant la fréquence prédéterminée,
un système de récupération de produits, et
un système d'enlèvement d'impuretés comportant au moins un convoyeur (48, 57, 58),
**caractérisé en ce que**
le dispositif de chargement séparé (19) comprend une presse pour introduire la charge (17) horizontalement et obliquement vers le bas le long du guide d'entrée (12), et au-dessus de la surface de barres de guidage de fusion (15A) pour faire fondre la charge (17),
le système de déplacement de la charge (17) comprend au moins un groupe de tambours de sollicitation et de nettoyage (36) pour déplacer la charge (17) le long de la surface des barres de guidage de fusion (15A) au moyen de doigts de poussée et de peignage (40) passant à travers les fentes de guidage et de nettoyage (41A), et
le système d'enlèvement d'impuretés comprend au moins deux convoyeurs de types différents disposés en série, le premier convoyeur (48) enlevant les impuretés obliquement vers le haut au-dessus de la surface du bain (14) à l'intérieur duquel au moins une couche de tuyaux chauffants (15) est prévue.

11. Dispositif selon la revendication 10,
**caractérisé en ce que** le carter (1) se présente sous la forme de l'écran thermique isolant (11) entourant la partie inférieure (5) de la cuve en acier (6), et du capot (34) muni des couvercles (43), chaque couvercle (43) étant fixé au moyen de la série d'organes de serrage (44).

12. Dispositif selon la revendication 10,
**caractérisé en ce que** le système de chauffage comprend la source de combustible (2), la chambre de combustion (3), la chambre de chauffe supérieure (4), les chambres de chauffe latérales (16) et au moins un groupe de tuyaux chauffants (15) placés à l'intérieur du bain (14) qui comprend sur sa surface supérieure le système de guidage de la charge (17) sous la forme du système de barres de guidage de fusion parallèles (15A) de section transversale rectangulaire.

13. Dispositif selon la revendication 10,
**caractérisé en ce que** le dispositif de chargement séparé (19) pour introduire la charge (17) horizontalement, en introduisant la charge (17) par l'intermédiaire du connecteur presse-réacteur (18) comprenant le registre d'arrêt et de commande (69), la sortie de chargement (31) qui s'étend jusque dans la goulotte d'amenée (32), avantageusement sur une distance égale à au moins un tiers du diamètre de la goulotte (32), et la goulotte (32), de préférence sous la forme de déchets de matières plastiques et de pneus prédécoupés, au-dessus de la surface de fusion des barres de guidage de fusion (15A), comprend une presse à deux étages ayant de préférence une poussée horizontale d'au moins 5 MPa, très préférablement à une pression d'au moins 8 MPa.

14. Dispositif selon la revendication 10, **caractérisé en ce que** le dispositif de chargement (19) pour introduire la charge (17) horizontalement par l'intermédiaire du connecteur presse-réacteur (18) comprenant le registre d'arrêt et de commande (69), la sortie de chargement (31) qui s'étend jusque dans la goulotte d'amenée (32), avantageusement sur une distance égale à au moins un tiers du diamètre de la goulotte (32), et la goulotte (32), de préférence sous la forme de déchets de matières plastiques et de pneus prédécoupés, au-dessus de la surface de fusion des barres de guidage de fusion (15A), comprend le distributeur (22), le convoyeur d'amenée (23) qui conduit à la trémie (24) du dispositif de chargement (19), le sas vertical (25), l'unité de blocage de charge (26) comprenant avantageusement le moteur (28) et le levier rotatif (29) ainsi que le clapet de fermeture (30), et la presse de poussée horizontale à un seul étage (27) ayant de préférence une poussée horizontale d'au moins 5 MPa, très préférablement à une pression d'au moins 8 MPa.

15. Dispositif selon la revendication 13 ou 14, **caractérisé en ce que** le connecteur presse-réacteur (18) et le sas vertical (25) se présentent tous deux sous la forme d'une chambre fermée des deux côtés au moyen de vannes à tiroirs (33).

16. Dispositif selon la revendication 10, **caractérisé en ce que** le système de déplacement de charge comprend le système formé d'au moins un, avantageusement trois, très avantageusement cinq tambours de sollicitation et de nettoyage (36) disposés en groupes, chaque tambour de sollicitation et de nettoyage (36) comprenant au moins deux arbres de support, à savoir l'arbre de support actif (38) et l'arbre de support passif (37), le corps de tambour de sollicitation et de nettoyage (39) comportant les doigts de poussée et de peignage (40) et la plaque de guidage et de nettoyage (41) munie des fentes de guidage et de nettoyage (41A) et une unité d'entraînement (42).

17. Dispositif selon la revendication 10, **caractérisé en ce qu'**il comprend des éléments de pression sous la forme d'au moins une, de préférence deux, parties mobiles de barres de guidage de fusion (15), chaque groupe d'éléments de pression étant entraîné de manière indépendante à partir de l'un des tambours de sollicitation et de nettoyage (36), au moyen d'un système de manivelle comprenant avantageusement un axe d'entraînement (68), un bras d'entraînement (66) et un axe d'accouplement (67).

18. Dispositif selon la revendication 10, **caractérisé en ce que** le système de récupération de produits comprend au moins une ouverture de sortie (45), de préférence au moins deux ouvertures de sortie (45) dans la zone supérieure de la paroi du capot (34), situées à une hauteur de 20 à 500 mm au-dessus de la couche de la charge liquéfiée (13) formée autour des éléments de fusion, avantageusement à une hauteur de 20 à 100 mm au-dessus de la couche de la charge liquéfiée (13), et menant à un collecteur de produits gazeux (46) de la canalisation de collecte de produits gazeux (47).

19. Dispositif selon la revendication 10, **caractérisé en ce que** le système d'enlèvement d'impuretés comprend le convoyeur à chaîne (48) à position réglable, qui comprend avantageusement l'unité de réglage de position comprenant l'unité d'entraînement (54) munie de l'ensemble formant levier (55) pour soulever l'extrémité avant (56) du convoyeur à chaîne (48), en mode de travail parallèle à l'ensemble coulissant (49) comprenant avantageusement sur sa surface supérieure le système de guidage sous la forme du système de barres de guidage parallèles (49A) de section transversale rectangulaire, et l'unité d'enlèvement d'impuretés (50) avantageusement située dans le sabot d'appui (51) de l'ensemble coulissant (49), au-dessus du réceptacle mobile d'impuretés solides (60), ainsi que le sas de collecte (53) au-dessus du réceptacle mobile d'impuretés solides (60).

20. Dispositif selon la revendication 18, **caractérisé en ce que** l'unité d'enlèvement d'impuretés (50) comprend le convoyeur à vis supérieur (57) et le convoyeur à vis inférieur (58) disposés en série l'un avec l'autre et avec le convoyeur à chaîne (48), et de préférence au moins un agitateur (59) situé au-dessus du convoyeur à vis supérieur (57) et/ou du convoyeur à vis inférieur (58).

EP 1 664 240 B1

**Fig. 1**

EP 1 664 240 B1

**Fig. 2**

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9506682 A
- US 3770419 A, Brown
- US 1658143 A, Tripp
- EP 0395486 A